# EUROPEAN PATENT APPLICATION

(11) **EP 4 354 539 A1**
(43) Date of publication of application: **17.04.2024**
(21) Application number: 22215362.9
(22) Date of filing: 21.12.2022
(51) Int. Cl.: H01M 4/1391, H01M 4/36, H01M 4/505, H01M 4/525, H01M 10/0525

(54) **A LITHIUM-ION BATTERY ELECTRODE PIECE**

(30) Priority: 11.10.2022 CN 202211241217
(71) Applicant: CALB Co., Ltd., Changzhou City, Jiangsu Province (CN)
(72) Inventor: ZHOU, Xianglong, Changzhou City, Jiangsu Province (CN); WANG, Zhimin, Changzhou City, Jiangsu Province (CN); LI, Kui, Changzhou City, Jiangsu Province (CN); SHAN, Xuyi, Changzhou City, Jiangsu Province (CN); LI, Yanlong, Changzhou City, Jiangsu Province (CN); LI, Dongdong, Changzhou City, Jiangsu Province (CN)
(74) Representative: Becker, Eberhard

(57) **Abstract**

The invention provides a lithium-ion battery electrode piece and a lithium-ion battery including the same. The electrode piece includes an electrode active material layer disposed on the surface of the current collector and a protective layer disposed on the surface of the electrode active material layer. The protective layer is composed of metal oxide layers (1) and conductive layers (2) alternately stacked in the horizontal direction. The area ratio of the metal oxide layers (1) to the conductive layers (2) is 4:1-1:4, and the thickness ratio is 0.5:1-1:1. According to the invention, by regulating the shape and ratio of the high temperature stability material and the conductive active material on the electrode piece in the process of coating the protective layer, the amount of the two coating materials is precisely controlled to implement the precise regulation of the high temperature stability and rate performance of the electrode piece.

## Description

### BACKGROUND

### Technical Field

The invention relates to the field of lithium ion batteries, and specifically, to a modified lithium-ion battery electrode piece. The lithium-ion battery electrode piece includes an electrode active material layer disposed on the surface of the current collector and a protective layer disposed on the surface of the electrode active material layer, and the protective layer is formed by alternately stacking metal oxide layers and conductive layers in a horizontal direction.

### Description of Related Art

At present, in lithium-ion batteries, common materials for a positive electrode include lithium cobalt oxide, lithium manganate, lithium iron phosphate, and ternary nickel-based nickel-cobalt lithium manganate (NCM) and nickel-cobalt aluminum oxide (NCA), etc. However, these materials have problems of high temperature stability and poor rate performance, and the material for a negative electrode is usually graphite, but it has high surface activity and poor high temperature stability, where spherical graphite also has the problems of high anisotropy, few lithium ion de-intercalation end faces, and poor rate performance. Therefore, how to improve the high temperature stability and rate performance of the lithium-ion battery electrode piece has become an important issue to be considered in the design of the battery electrode piece.

To overcome the issue, for example, CN113036091 discloses that a carbon coating layer is disposed on the surface of the ternary positive electrode piece by magnetron sputtering to improve the electronic conductivity of the surface of the material and reduce the polarization in the process of charging and discharging, so as to improve the cycle performance and thermal stability of the ternary positive electrode material and improve the rate performance of the material; CN100580990 discloses that a layer of alumina is formed by magnetron sputtering on the surface of the positive electrode piece to improve the safety of the positive electrode material; CN108615861 B discloses that a mixed coating layer of high temperature stable material and electrochemically active material is disposed on the surface of the positive electrode piece to improve the rate performance and thermal stability of the battery.

However, methods such as those disclosed in the foregoing patent documents cannot effectively balance the high temperature stability and rate performance of the electrode piece, and a method is still needed to further improve the electrode piece of the lithium-ion battery, and meanwhile the regulation and improvement of the high temperature stability performance and the rate performance may be implemented.

### SUMMARY

In view of the problems, the application teaches to coat the surface of the lithium-ion battery electrode piece with alternately disposed stable metal oxide layers and carbon material conductive layers by magnetron sputtering or electron beam evaporation. Since the DC internal resistance (DCR) of the electrode piece is larger when the area of the metal oxide layer is larger, excessive heat is generated during the cycle, which may destroy the structural stability of the electrode piece. When the area of the conductive layer of the carbon material is larger, the active carbon material is easy to react with the electrolyte, which may consume a large amount of active lithium ions and reduce the battery capacity. The active carbon material itself has poor high temperature stability, and the structure is easily damaged at high temperature. To this end, the application teaches to precisely regulate the shape and ratio of the metal oxide material and the carbon material when coating the electrode piece, so that the metal oxide can block the consumption of active lithium by the electrode piece, and the carbon material can reduce the DCR, so that the heat generated by the cycle is reduced to protect the cycle stability of the electrode piece, and thereby the regulation and balance of the high temperature stability performance and rate performance of the electrode piece can be realized.

Specifically, in one aspect, the invention provides a modified lithium-ion battery electrode piece, including an electrode active material layer disposed on the surface of the current collector and a protective layer disposed on the surface of the electrode active material layer. The protective layer is composed of metal oxide layers and conductive layers alternately stacked in the horizontal direction, the area ratio of the metal oxide layers to the conductive layers is 1 :9-9: 1, and the thickness ratio is 0.5:1-1:1.

In another aspect, the invention provides a lithium-ion battery including the lithium-ion battery electrode piece.

The invention utilizes high temperature stable material and carbon material to coat the lithium-ion battery electrode piece, which is adapted for both positive and negative electrode pieces of a lithium-ion battery. By regulating the shape and ratio of high temperature stability material and carbon material on the electrode piece during the coating process, for example, by means of a magnetron sputtering mold, the amount of two coating materials can be precisely controlled, and thereby implementing the precise regulation of the high temperature stability and rate performance of the electrode piece.

### BRIEF DESCRIPTION OF THE DRAWING

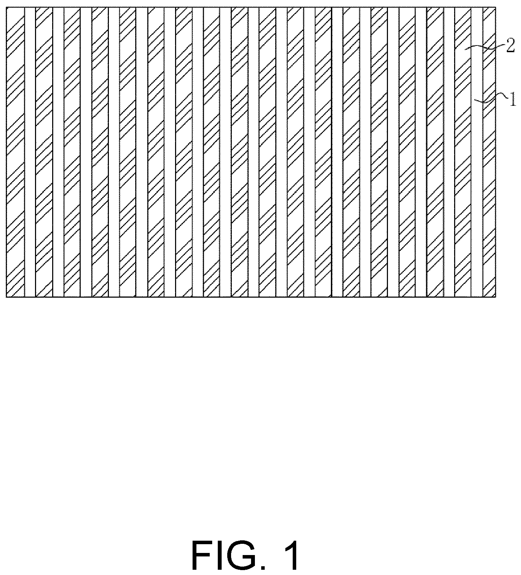

FIG. 1 is a schematic view of a protective layer of a modified lithium-ion battery electrode piece according to an embodiment of the invention, whereby metal oxide layers 1 and conductive layers 2 are included.

### DESCRIPTION OF THE EMBODIMENTS

The application will be further described in detail below with reference to the accompanying drawings and embodiments. From these descriptions, the features and advantages of the application will become clearer and more definite.

In addition, the technical features involved in the different embodiments of the application described below can be combined with each other as long as there is no conflict with each other.

The invention provides a modified lithium-ion battery electrode piece, which includes an electrode active material layer disposed on the surface of the current collector and a protective layer disposed on the surface of the electrode active material layer. The protective layer is composed of metal oxide layers and conductive layers alternately stacked in the horizontal direction, the area ratio of the metal oxide layers to the conductive layers is 1:9-9: 1, and the thickness ratio is 0.5:1-1:1.

In an embodiment according to the invention, the area of the metal oxide layers is 80%-20% of the area of the electrode piece, and the thickness is 3-250 nm, preferably 3-50 nm.

In another embodiment according to the invention, the area of the conductive layers is 20%-80% of the area of the electrode piece, and the thickness is 3-1000 nm, preferably 3-100 nm.

In another embodiment according to the invention, the thickness ratio of the metal oxide layers to the conductive layers is preferably 0.8:1.

In another embodiment according to the invention, a metal oxide of the metal oxide layers is selected from one or more of alumina, titania, zirconia and barium titanate, and is preferably at least one of alumina or barium titanate.

In another embodiment according to the invention, the conductive layers are a carbon material layer.

In another embodiment according to the invention, a carbon material of the carbon material layer includes pure carbon and/or nitrogen, and phosphorus doped carbon material/artificial graph graphite.

In another embodiment according to the invention, the electrical conductivity of the electrode piece is 1.1×10⁻³S/cm to 9.1×10⁻³S/cm.

In another embodiment according to the invention, the metal oxide layers and the conductive layers are disposed on the surface of the electrode active material layer by magnetron sputtering and/or electron beam evaporation coating.

When the protective layer is disposed by magnetron sputtering and/or electron beam evaporation coating, the control of the area of the metal oxide layers and the conductive layers can be implemented by using different shapes of molds, and the control of the thickness of the two layers can be controlled by the coating time. Therefore, according to the invention, the thickness of the metal oxide layers and the thickness of the conductive layers in the protective layer are controllable, the ratio is controllable, and under the condition that the influence on the capacity of the electrode piece is minimal, it is possible to precisely regulate the high temperature stability and rate capability of the electrode piece according to different application scenarios.

The invention may be further described according to the following embodiments.

### Embodiment

### Embodiment 1

### Preparation of positive electrode

The positive active material NCM562, the conductive agent acetylene black, and the binder PVDF were mixed according to a mass ratio of 96:2:2, the solvent NMP was added to have a solid content of 60wt%, and the mixture was stirred by a vacuum mixer until the system was uniform to obtain a positive electrode slurry. Subsequently, the obtained positive electrode slurry was uniformly coated on both surfaces of the positive electrode current collector aluminum foil, rolled to make the compaction density between 3.2-3.5 g/cm³, and then vacuum-dried at 110°C overnight to obtain the positive electrode piece.

The prepared NCM562 positive electrode piece was installed in the cavity of a magnetron sputtering machine (JCP 350M2, Beijing Techno Technology Co., Ltd.) as a substrate. Al₂O₃ was used as the target, the target was disposed in the cavity of the magnetron sputtering machine, and the rectangular mold was disposed on the positive electrode piece. Then, the cavity was evacuated to 2.0×10⁻⁴ Pa, and the substrate was heated. After the substrate temperature was stabilized at 100° C., argon gas with a purity greater than 99.999% was introduced into the cavity of the magnetron sputtering machine. Under the sputtering conditions of substrate speed of 30 rpm, target-to-base distance of 9 cm, argon gas flow of 20 ml/min, RF sputtering power of 60 W, and sputtering pressure of 1 Pa, on the surface of the prepared NCM562 positive electrode piece, an Al₂O₃ thin film layer with a thickness of about 30 nm was deposited by magnetron sputtering. The positive electrode piece was naturally cooled in the cavity, and then the positive electrode piece was taken out, and finally NCM562/ Al₂O₃ with a thickness of about 30 nm was obtained. The cavity is opened for replacing the mold, the plated rectangular Al₂O₃ layer is covered with the mold and put back into the cavity, the vacuum degree of the cavity is set to 6.0×10⁻⁴ Pa, carbon is used as the target material, and argon gas with a purity greater than 99.999% was introduced into the cavity of the magnetron sputtering machine. Under the sputtering conditions of substrate speed of 15 rpm, target-to-base distance of 9 cm, argon gas flow of 100 ml/min, RF sputtering power of 80 W, and sputtering pressure of 2 Pa, a carbon thin film layer about 120 nm thick was deposited by magnetron sputtering on the surface of the NCM562 positive electrode piece. After cooling, a positive electrode piece coated with an Al₂O₃ layer and a carbon layer was obtained, the area ratio of the Al₂O₃ deposition layer to the carbon deposition layer is 1:9, and the thickness ratio is 1:4.

The electrode piece was dried, cold-pressed, and cut to obtain a positive electrode piece after being processed by magnetron sputtering.

### Preparation of negative electrode piece

The negative electrode active material of graphite, conductive agent acetylene black, thickener CMC, and binder SBR were mixed in a mass ratio of 96.4:1:1.2:1.4, solvent deionized water was added, and the mixture is stirred by a vacuum mixer until the system is uniform to obtain a negative electrode slurry. The negative electrode slurry is uniformly coated on two surfaces of the negative electrode current collector copper foil, dried at room temperature, then transferred to an oven to continue drying, and then cold-pressed and cut to obtain the negative electrode piece.

### Preparation of electrolyte

Ethylene carbonate (EC), ethyl methyl carbonate (EMC), and diethyl carbonate (DEC) were mixed in a volume ratio of 1:1:1 to obtain an organic solvent, then the fully dried lithium salt LiPF6 was dissolved in the mixed organic solvent, and an electrolyte with a concentration of 1 mol/L was prepared.

### Preparation of lithium ion battery

The positive electrode piece, polyethylene separator, and negative electrode piece are stacked in sequence, so that the separator is disposed between the positive electrode piece and the negative electrode piece to play a role of isolation, which is wound to obtain a bare cell. The bare cell is disposed in the outer packaging case, dried and injected into the electrolyte, and the lithium-ion battery is obtained and tested after vacuum packaging, standing, forming, and shaping processes, etc.

### Embodiment 2

### Preparation of positive electrode

The positive active material NCM562, the conductive agent acetylene black, and the binder PVDF were mixed according to a mass ratio of 96:2:2, the solvent NMP was added to have a solid content of 60wt%, and the mixture was stirred by a vacuum mixer until the system was uniform to obtain a positive electrode slurry. Subsequently, the obtained positive electrode slurry was uniformly coated on both surfaces of the positive electrode current collector aluminum foil, rolled to make the compaction density between 3.2-3.5 g/cm³, and then vacuum-dried at 110°C overnight to obtain the positive electrode piece.

The prepared NCM562 positive electrode piece was installed in the cavity of a magnetron sputtering machine (JCP 350M2, Beijing Techno Technology Co., Ltd.) as a substrate. Al₂O₃ was used as the target, the target was disposed in the cavity of the magnetron sputtering machine, and the rectangular mold was disposed on the positive electrode piece. Then, the cavity was evacuated to 2.0×10⁻⁴ Pa, and the substrate was heated. After the substrate temperature was stabilized at 100° C., argon gas with a purity greater than 99.999% was introduced into the cavity of the magnetron sputtering machine. Under the sputtering conditions of substrate speed of 30 rpm, target-to-base distance of 9 cm, argon gas flow of 30 ml/min, RF sputtering power of 60 W, and sputtering pressure of 1 Pa, on the surface of the prepared NCM562 positive electrode piece, an Al₂O₃ thin film layer with a thickness of about 30 nm was deposited by magnetron sputtering. The positive electrode piece was naturally cooled in the cavity, and then the positive electrode piece was taken out, and finally NCM562/ Al₂O₃ with a thickness of about 30 nm was obtained. The cavity is opened for replacing the mold, the plated rectangular Al₂O₃ layer is covered with the mold and put back into the cavity, the vacuum degree of the cavity is set to 6.0×10⁻⁴ Pa, carbon is used as the target material, and argon gas with a purity greater than 99.999% was introduced into the cavity of the magnetron sputtering machine. Under the sputtering conditions of substrate speed of 30 rpm, target-to-base distance of 9 cm, argon gas flow of 60 ml/min, RF sputtering power of 80 W, and sputtering pressure of 2 Pa, a carbon thin film layer about 60 nm thick was deposited by magnetron sputtering on the surface of the NCM562 positive electrode piece. After cooling, a positive electrode piece coated with an Al₂O₃ layer and a carbon layer was obtained, the area ratio of the Al₂O₃ deposition layer to the carbon deposition layer is 5:5, and the thickness ratio is 1:2.

The electrode piece was dried, cold-pressed, and cut to obtain a positive electrode piece after being processed by magnetron sputtering.

With the positive electrode piece obtained in Embodiment 2, a lithium-ion battery was prepared and tested in the same manner as in Embodiment 1.

### Embodiment 3

### Preparation of positive electrode

The positive active material NCM562, the conductive agent acetylene black, and the binder PVDF were mixed according to a mass ratio of 96:2:2, the solvent NMP was added to have a solid content of 60wt%, and the mixture was stirred by a vacuum mixer until the system was uniform to obtain a positive electrode slurry. Subsequently, the obtained positive electrode slurry was uniformly coated on both surfaces of the positive electrode current collector aluminum foil, rolled to make the compaction density between 3.2-3.5 g/cm³, and then vacuum-dried at 110°C overnight to obtain the positive electrode piece.

The prepared NCM562 positive electrode piece was installed in the cavity of a magnetron sputtering machine (JCP 350M2, Beijing Techno Technology Co., Ltd.) as a substrate. Al₂O₃ was used as the target, the target was disposed in the cavity of the magnetron sputtering machine, and the rectangular mold was disposed on the positive electrode piece. Then, the cavity was evacuated to 2.0×10⁻⁴ Pa, and the substrate was heated. After the substrate temperature was stabilized at 100° C., argon gas with a purity greater than 99.999% was introduced into the cavity of the magnetron sputtering machine. Under the sputtering conditions of substrate speed of 25 rpm, target-to-base distance of 9 cm, argon gas flow of 100 ml/min, RF sputtering power of 60 W, and sputtering pressure of 1 Pa, on the surface of the prepared NCM562 positive electrode piece, an Al₂O₃ thin film layer with a thickness of about 30 nm was deposited by magnetron sputtering. The positive electrode piece was naturally cooled in the cavity, and then the positive electrode piece was taken out, and finally NCM562/ Al₂O₃ with a thickness of about 30 nm was obtained. The cavity is opened for replacing the mold, the plated rectangular Al₂O₃ layer is covered with the mold and put back into the cavity, the vacuum degree of the cavity is set to 6.0×10⁻⁴ Pa, carbon is used as the target material, and argon gas with a purity greater than 99.999% was introduced into the cavity of the magnetron sputtering machine. Under the sputtering conditions of substrate speed of 35 rpm, target-to-base distance of 9 cm, argon gas flow of 20 ml/min, RF sputtering power of 80 W, and sputtering pressure of 2 Pa, a carbon thin film layer about 20 nm thick was deposited by magnetron sputtering on the surface of the NCM562 positive electrode piece. After cooling, a positive electrode piece coated with an Al₂O₃ layer and a carbon layer was obtained, the area ratio of the Al₂O₃ deposition layer to the carbon deposition layer is 9: 1, and the thickness ratio is 3:2.

The electrode piece was dried, cold-pressed, and cut to obtain a positive electrode piece after being processed by magnetron sputtering.

With the positive electrode piece obtained in Embodiment 3, a lithium-ion battery was prepared and tested in the same manner as in Embodiment 1.

### Embodiment 4

### Preparation of positive electrode

The positive active material NCM562, the conductive agent acetylene black, and the binder PVDF were mixed according to a mass ratio of 96:2:2, the solvent NMP was added to have a solid content of 60wt%, and the mixture was stirred by a vacuum mixer until the system was uniform to obtain a positive electrode slurry. Subsequently, the obtained positive electrode slurry was uniformly coated on both surfaces of the positive electrode current collector aluminum foil, rolled to make the compaction density between 3.2-3.5 g/cm³, and then vacuum-dried at 110°C overnight to obtain the positive electrode piece.

The prepared NCM562 positive electrode piece was installed in the cavity of a magnetron sputtering machine (JCP 350M2, Beijing Techno Technology Co., Ltd.) as a substrate. Al₂O₃ was used as the target, the target was disposed in the cavity of the magnetron sputtering machine, and the rectangular mold was disposed on the positive electrode piece. Then, the cavity was evacuated to 2.0×10⁻⁴ Pa, and the substrate was heated. After the substrate temperature was stabilized at 100° C., argon gas with a purity greater than 99.999% was introduced into the cavity of the magnetron sputtering machine. Under the sputtering conditions of substrate speed of 30 rpm, target-to-base distance of 9 cm, argon gas flow of 20 ml/min, RF sputtering power of 60 W, and sputtering pressure of 1 Pa, on the surface of the prepared NCM562 positive electrode piece, an Al₂O₃ thin film layer with a thickness of about 30 nm was deposited by magnetron sputtering. The positive electrode piece was naturally cooled in the cavity, and then the positive electrode piece was taken out, and finally NCM562/ Al₂O₃ with a thickness of about 30 nm was obtained. The cavity is opened for replacing the mold, the plated rectangular Al₂O₃ layer is covered with the mold and put back into the cavity, the vacuum degree of the cavity is set to 6.0×10⁻⁴ Pa, carbon is used as the target material, and argon gas with a purity greater than 99.999% was introduced into the cavity of the magnetron sputtering machine. Under the sputtering conditions of substrate speed of 25 rpm, target-to-base distance of 9 cm, argon gas flow of 80 ml/min, RF sputtering power of 80 W, and sputtering pressure of 2 Pa, a carbon thin film layer about 45 nm thick was deposited by magnetron sputtering on the surface of the NCM562 positive electrode piece. After cooling, a positive electrode piece coated with an Al₂O₃ layer and a carbon layer was obtained, the area ratio of the Al₂O₃ deposition layer to the carbon deposition layer is 2:8, and the thickness ratio is 2:3.

The electrode piece was dried, cold-pressed, and cut to obtain a positive electrode piece after being processed by magnetron sputtering.

With the positive electrode piece obtained in Embodiment 4, a lithium-ion battery was prepared and tested in the same manner as in Embodiment 1.

### Embodiment 5

### Preparation of positive electrode

The positive active material NCM562, the conductive agent acetylene black, and the binder PVDF were mixed according to a mass ratio of 96:2:2, the solvent NMP was added to have a solid content of 60wt%, and the mixture was stirred by a vacuum mixer until the system was uniform to obtain a positive electrode slurry. Subsequently, the obtained positive electrode slurry was uniformly coated on both surfaces of the positive electrode current collector aluminum foil, rolled to make the compaction density between 3.2-3.5 g/cm³, and then vacuum-dried at 110°C overnight to obtain the positive electrode piece.

The prepared NCM562 positive electrode piece was installed in the cavity of a magnetron sputtering machine (JCP 350M2, Beijing Techno Technology Co., Ltd.) as a substrate. Al₂O₃ was used as the target, the target was disposed in the cavity of the magnetron sputtering machine, and the rectangular mold was disposed on the positive electrode piece. Then, the cavity was evacuated to 2.0×10⁻⁴ Pa, and the substrate was heated. After the substrate temperature was stabilized at 100° C., argon gas with a purity greater than 99.999% was introduced into the cavity of the magnetron sputtering machine. Under the sputtering conditions of substrate speed of 30 rpm, target-to-base distance of 9 cm, argon gas flow of 80 ml/min, RF sputtering power of 60 W, and sputtering pressure of 1 Pa, on the surface of the prepared NCM562 positive electrode piece, an Al₂O₃ thin film layer with a thickness of about 30 nm was deposited by magnetron sputtering. The positive electrode piece was naturally cooled in the cavity, and then the positive electrode piece was taken out, and finally NCM562/ Al₂O₃ with a thickness of about 30 nm was obtained. The cavity is opened for replacing the mold, the plated rectangular Al₂O₃ layer is covered with the mold and put back into the cavity, the vacuum degree of the cavity is set to 6.0×10⁻⁴ Pa, carbon is used as the target material, and argon gas with a purity greater than 99.999% was introduced into the cavity of the magnetron sputtering machine. Under the sputtering conditions of substrate speed of 30 rpm, target-to-base distance of 9 cm, argon gas flow of 20 ml/min, RF sputtering power of 80 W, and sputtering pressure of 3 Pa, a carbon thin film layer about 30 nm thick was deposited by magnetron sputtering on the surface of the NCM562 positive electrode piece. After cooling, a positive electrode piece coated with an Al₂O₃ layer and a carbon layer was obtained, the area ratio of the Al₂O₃ deposition layer to the carbon deposition layer is 8:2, and the thickness ratio is 1:1.

The electrode piece was dried, cold-pressed, and cut to obtain a positive electrode piece after being processed by magnetron sputtering.

With the positive electrode piece obtained in Embodiment 5, a lithium-ion battery was prepared and tested in the same manner as in Embodiment 1.

### Comparative example 1

### Preparation of positive electrode

The positive active material NCM562, the conductive agent acetylene black, and the binder PVDF were mixed according to a mass ratio of 96:2:2, the solvent NMP was added to have a solid content of 60wt%, and the mixture was stirred by a vacuum mixer until the system was uniform to obtain a positive electrode slurry. Subsequently, the obtained positive electrode slurry was uniformly coated on both surfaces of the positive electrode current collector aluminum foil, rolled to make the compaction density between 3.2-3.5 g/cm³, and then vacuum-dried at 110°C overnight to obtain the positive electrode piece.

The prepared NCM562 positive electrode piece was installed in the cavity of a magnetron sputtering machine (JCP 350M2, Beijing Techno Technology Co., Ltd.) as a substrate. Al₂O₃ was used as the target, the target was disposed in the cavity of the magnetron sputtering machine, and the rectangular mold was disposed on the positive electrode piece. Then, the cavity was evacuated to 2.0×10⁻⁴ Pa, and the substrate was heated. After the substrate temperature was stabilized at 100° C., argon gas with a purity greater than 99.999% was introduced into the cavity of the magnetron sputtering machine. Under the sputtering conditions of substrate speed of 30 rpm, target-to-base distance of 9 cm, argon gas flow of 10 ml/min, RF sputtering power of 60 W, and sputtering pressure of 1 Pa, on the surface of the prepared NCM562 positive electrode piece, an Al₂O₃ thin film layer with a thickness of about 30 nm was deposited by magnetron sputtering. The positive electrode piece was naturally cooled in the cavity, and then the positive electrode piece was taken out, and finally NCM562/ Al₂O₃ with a thickness of about 30 nm was obtained. The cavity is opened for replacing the mold, the plated rectangular Al₂O₃ layer is covered with the mold and put back into the cavity, the vacuum degree of the cavity is set to 6.0×10⁻⁴ Pa, carbon is used as the target material, and argon gas with a purity greater than 99.999% was introduced into the cavity of the magnetron sputtering machine. Under the sputtering conditions of substrate speed of 15 rpm, target-to-base distance of 9 cm, argon gas flow of 90 ml/min, RF sputtering power of 80 W, and sputtering pressure of 3 Pa, a carbon thin film layer about 270 nm thick was deposited by magnetron sputtering on the surface of the NCM562 positive electrode piece. After cooling, a positive electrode piece coated with an Al₂O₃ layer and a carbon layer was obtained, the area ratio of the Al₂O₃ deposition layer to the carbon deposition layer is 0.5:9.5, and the thickness ratio is 1:9.

The electrode piece was dried, cold-pressed, and cut to obtain a positive electrode piece after being processed by magnetron sputtering.

With the positive electrode piece obtained in Comparative example 1, a lithium-ion battery was prepared and tested in the same manner as in Embodiment 1.

### Comparative example 2

### Preparation of positive electrode

The positive active material NCM562, the conductive agent acetylene black, and the binder PVDF were mixed according to a mass ratio of 96:2:2, the solvent NMP was added to have a solid content of 60wt%, and the mixture was stirred by a vacuum mixer until the system was uniform to obtain a positive electrode slurry. Subsequently, the obtained positive electrode slurry was uniformly coated on both surfaces of the positive electrode current collector aluminum foil, rolled to make the compaction density between 3.2-3.5 g/cm³, and then vacuum-dried at 110°C overnight to obtain the positive electrode piece.

The prepared NCM562 positive electrode piece was installed in the cavity of a magnetron sputtering machine (JCP 350M2, Beijing Techno Technology Co., Ltd.) as a substrate. Al₂O₃ was used as the target, the target was disposed in the cavity of the magnetron sputtering machine, and the rectangular mold was disposed on the positive electrode piece. Then, the cavity was evacuated to 2.0×10⁻⁴ Pa, and the substrate was heated. After the substrate temperature was stabilized at 100° C., argon gas with a purity greater than 99.999% was introduced into the cavity of the magnetron sputtering machine. Under the sputtering conditions of substrate speed of 30 rpm, target-to-base distance of 9 cm, argon gas flow of 90 ml/min, RF sputtering power of 60 W, and sputtering pressure of 1 Pa, on the surface of the prepared NCM562 positive electrode piece, an Al₂O₃ thin film layer with a thickness of about 30 nm was deposited by magnetron sputtering. The positive electrode piece was naturally cooled in the cavity, and then the positive electrode piece was taken out, and finally NCM562/ Al₂O₃ with a thickness of about 30 nm was obtained. The cavity is opened for replacing the mold, the plated rectangular Al₂O₃ layer is covered with the mold and put back into the cavity, the vacuum degree of the cavity is set to 6.0×10⁻⁴ Pa, carbon is used as the target material, and argon gas with a purity greater than 99.999% was introduced into the cavity of the magnetron sputtering machine. Under the sputtering conditions of substrate speed of 40 rpm, target-to-base distance of 9 cm, argon gas flow of 10 ml/min, RF sputtering power of 80 W, and sputtering pressure of 3 Pa, a carbon thin film layer about 7.5 nm thick was deposited by magnetron sputtering on the surface of the NCM562 positive electrode piece. After cooling, a positive electrode piece coated with an Al₂O₃ layer and a carbon layer was obtained, the area ratio of the Al₂O₃ deposition layer to the carbon deposition layer is 9.5:0.5, and the thickness ratio is 4:1.

The electrode piece was dried, cold-pressed, and cut to obtain a positive electrode piece after being processed by magnetron sputtering.

With the positive electrode piece obtained in Comparative example 2, a lithium-ion battery was prepared and tested in the same manner as in Embodiment 1.

The following performance tests were performed on the lithium-ion batteries prepared in the Embodiments 1-5 and Comparative examples 1-2.

### (1) High temperature cycle performance test

In an incubator at 45°C, the prepared lithium-ion batteries were charged at a rate of 0.5C and discharged at a rate of 1C, and the full-charge discharge cycle test was performed. After 200 cycles, the discharge capacity retention rate of the batteries was observed.

### (2) Dynamic performance test

In an incubator at 45°C, the prepared lithium-ion batteries were fully charged at a rate of 0.3C (the cut-off current is 0.05c), and discharged at a rate of 0.3C (the cut-off voltage is 2.75V). After being fully charged, the batteries were discharge at a rate of 1C, 2C, 3C, 4C, and 5C, respectively to a cut-off voltage, the discharge gram capacity (mAh/g) of the positive electrode piece was calculated.

### (3) Electrode piece resistance test

After the coating layer is sputtered on the electrode piece, the electrode piece is cooled to room temperature, compacted to 1.65g/cm³, and the surface resistance of the electrode piece is tested with an ACCFILM film resistance tester.

The performance test results of the lithium ion batteries prepared in Embodiments 1-5 and Comparative examples 1-2 are shown in Table 1.

**Table 1**

| Embodiments | Metal oxide layer | Conducti ve layer | Area ratio of the metal oxide layer to the conductive layer | Thickness ratio of the metal oxide layer to the conductive layer | cycle performance at 45°C (0.5C charge /1C discharge) 45°C @200cls discharge capacity retention rate | Rate performanc e /3C discharge capacity 0.3C charge/3C discharge capacity | Resistance of the electrode piece (mΩ) |
|---|---|---|---|---|---|---|---|
| Embodiment 1 | Al₂O₃ | carbon | 1:9 | 1:4 | 96.5% | 175mAh/g | 710 |
| Embodiment 2 | Al₂O₃ | carbon | 5:5 | 1:2 | 98.6% | 183mAh/g | 780 |
| Embodiment 3 | Al₂O₃ | carbon | 9:1 | 3:2 | 96.2% | 174mAh/g | 960 |
| Embodiment 4 | Al₂O₃ | carbon | 2:8 | 2:3 | 97.3% | 180mAh/g | 750 |
| Embodiment 5 | Al₂O₃ | carbon | 8:2 | 1:1 | 97.5% , | 184mAh/g | 920 |
| Comparative example 1 | Al₂O₃ | carbon | 0.5:9.5 | 1:9 | 95.1% | 162mAh/g | 1000 |
| Comparative example 2 | Al₂O₃ | carbon | 9.5:0.5 | 4:1 | 95.2% | 165mAh/g | 1120 |

The performance test results show that the coating area ratio and coating thickness of the high temperature stable metal oxide layer and the conductive layer in the surface protective layer of the positive electrode piece have different effects on the high temperature cycle performance, rate performance, and the resistance of the electrode piece of the battery. According to the test results of Embodiments 1-5, when the area ratio of the metal oxide layer to the conductive layer on the positive electrode is in the range of 1:4-4: 1, and the thickness ratio is in the range of 3:2-2:3, the protective layer of the electrode plate can well improve the high temperature cycle performance and rate performance of the lithium-ion battery and reduce the resistance of the electrode piece. This is mainly due to the alternately distributed high temperature stable metal oxide inert coating and carbon active coating in a suitable area ratio, so that the carbon active coating can well reduce the resistance of the electrode piece and improve the rate performance of the electrode piece, and the metal oxide inert coating can effectively absorb the heat generated during the cycle and improve the cycle life of the electrode piece.

According to the test results of Comparative example 1, when the area ratio of the metal oxide layer to the conductive layer on the positive electrode piece is less than 1:9 and the thickness ratio is less than 1:4, due to the small area and thickness of the metal oxide inert coating, the mass of the layer is small and the heat generated during the cycle of the electrode piece cannot be effectively absorbed, leading the electrode piece to have poor high temperature cycle performance, but the conductive carbon active coating has a large area, large thickness, and many active coating materials, which lead to an increase in the reaction between the layer and the electrolyte, consumption of more active lithium, and a decrease in the cycle capacity retention rate.

According to the test results of Comparative example 2, when the area ratio of the metal oxide layer to the conductive layer on the positive electrode piece is greater than 9:1 and the thickness ratio is greater than 4: 1, due to the large area and thickness of the metal oxide inert coating, resulting in a higher mass of the layer, its own resistance is large, which increases the resistance of the electrode piece, which reduces the rate performance of the electrode piece. During the high temperature cycle process, the lithium ions in the electrolyte cannot be effectively embedded in the electrode piece, resulting in lithium precipitation, which in turn reduces the cycle performance of the battery.

## Claims

1. A lithium-ion battery electrode piece, comprising an electrode active material layer disposed on a surface of a current collector and a protective layer disposed on a surface of the electrode active material layer, wherein the protective layer is composed of metal oxide layers (1) and conductive layers (2) alternately stacked in a horizontal direction, an area ratio of the metal oxide layers (1) to the conductive layers (2) is 9:1-1:9, and a thickness ratio is 0.5:1-1:1.

2. The lithium-ion battery electrode piece according to claim 1, wherein an area of the metal oxide layers (1) is 80%-20% of an area of the electrode piece, and a thickness is 3-250 nm.

3. The lithium-ion battery electrode piece according to claim 2, wherein the thickness is 3-50 nm.

4. The lithium-ion battery electrode piece according to claim 1, wherein an area of the conductive layers (2) is 20%-80% of an area of the electrode piece, and a thickness is 3-1000 nm.

5. The lithium-ion battery electrode piece according to claim 4, wherein the thickness is 3-100 nm.

6. The lithium-ion battery electrode piece according to claim 1, wherein the thickness ratio of the metal oxide layers (1) to the conductive layers is 0.8:1.

7. The lithium-ion battery electrode piece according to claim 1, wherein a metal oxide of the metal oxide layers (1) is one or more selected from alumina, titania, zirconia and barium titanate.

8. The lithium-ion battery electrode piece according to claim 7, wherein the metal oxide of the metal oxide layers (1) is at least one of alumina or barium titanate.

9. The lithium-ion battery electrode piece according to claim 1, wherein the conductive layers (2) are a carbon material layer.

10. The lithium-ion battery electrode piece according to claim 9, wherein a carbon material of the carbon material layer comprises organic cracked carbon.

11. The lithium-ion battery electrode piece according to claim 1, wherein an electrical conductivity of the electrode piece is 1.1×10⁻³S/cm to 9.1×10⁻³S/cm.

12. The lithium-ion battery electrode piece according to claim 1, wherein the metal oxide layers (1) and the conductive layers (2) are disposed on the surface of the electrode active material layer by magnetron sputtering and/or electron beam evaporation coating.

13. A lithium-ion battery, comprising the lithium-ion battery electrode piece according to any one of claim 1 to claim 12.
